# DEMANDE DE BREVET EUROPEEN

(11) **EP 4 011 944 A1**
(43) Date de publication de la demande: **15.06.2022**
(21) Numéro de dépôt: 21214291.3
(22) Date de dépôt: 14.12.2021
(51) Int. Cl.: C08J 5/04, C08J 7/04, C08J 7/05, B29C 41/22, B60R 13/02, C09D 5/18, C08G 59/40

(54) **PIÈCE EN MATÉRIAU RECYCLABLE POUR VÉHICULE**

(30) Priorité: 14.12.2020 FR 2013157
(71) Demandeur: ALSTOM Holdings, 93400 Saint-Ouen-sur-Seine (FR)
(72) Inventeur: LEPINE, Thomas, 59300 VALENCIENNES (FR)
(74) Mandataire: Lavoix

(57) **Abrégé**

La présente invention concerne une pièce (1) pour véhicule, notamment pour véhicule ferroviaire, comprenant un substrat (2) et un revêtement (3), caractérisée en ce que ledit substrat (2) comprend une résine recyclable et des fibres de renforcement, et en ce que le substrat (2) comprend une surface recouverte partiellement ou totalement par ledit revêtement (3), ledit revêtement (3) comprenant au moins une charge intumescente.

## Description

La présente invention concerne une pièce en matériau recyclable pour véhicule, notamment pour un véhicule ferroviaire. La présente invention concerne également un procédé de fabrication d'une pièce en matériau recyclable pour véhicule, notamment un véhicule ferroviaire.

Actuellement, un très grand nombre de pièces présentes dans les véhicules de transport sont fabriquées avec des matériaux composites. Ces matériaux offrent de nombreux avantages, notamment en terme de performances mécaniques ou de stabilité dans le temps. Cependant, un des inconvénients majeurs de ces matériaux est la difficulté de leur recyclage, car la matrice qui les compose comprend le plus souvent une résine réticulée, qui forme un réseau tridimensionnel qui ne peut être ni fondu ni dissous.

Les enjeux environnementaux liés au recyclage des matériaux composites ont favorisé le développement de nouvelles résines permettant d'obtenir des matériaux composites recyclables.

US 2016/0347902 décrit par exemple une résine époxyde durcie et chimiquement décomposable comprenant au moins une résine époxyde et au moins un agent durcissant comprenant au moins une fonction cyanate.

La Rosa et al. (Materials, 2018, 11, 353) décrit un procédé de recyclage d'un matériau composite obtenu à partir d'une résine époxyde et d'un agent durcissant aminé.

Cependant, la fabrication de pièces pour véhicule, et notamment pour véhicule ferroviaire, ne peut se faire avec n'importe quel matériau. En particulier, ces pièces doivent répondre à des normes de sécurité liées au risque d'incendie. A ce jour, les matériaux composites recyclables disponibles ne permettent pas la fabrication de pièces répondant à ces normes de sécurité incendie.

Il existe donc un besoin pour des pièces pour véhicule, notamment utilisables dans le domaine ferroviaire, qui peuvent être recyclables tout en étant compatibles avec les normes de sécurité imposées par ce domaine, liées en particulier aux risques d'incendie.

Un objectif de la présente invention est de fournir une pièce en matériau recyclable et utilisable dans un véhicule, notamment un véhicule ferroviaire.

La présente invention concerne donc une pièce pour véhicule, notamment pour véhicule ferroviaire, comprenant un substrat et un revêtement, caractérisée en ce que ledit substrat comprend une résine recyclable et des fibres de renforcement, et en ce que le substrat comprend une surface recouverte partiellement ou totalement par ledit revêtement, ledit revêtement comprenant au moins une charge intumescente.

Selon l'invention, la surface du substrat représente l'ensemble des surfaces extérieures du substrat.

Selon la présente invention, on entend par « véhicule ferroviaire » tout véhicule conçu pour se déplacer sur une voie ferrée, du type métro, train régional, tramway, train de marchandises, train à grande vitesse et autres.

Par « résine recyclable », on entend une résine chimiquement décomposable. En particulier, la résine recyclable est chimiquement décomposable en un polymère thermoplastique, ledit polymère thermoplastique pouvant lui-même être utilisé comme matériau de fabrication, par exemple comme matrice dans un matériau composite.

Par « surface recouverte partiellement par le revêtement », on entend qu'au moins 75%, de préférence au moins 90%, de la surface est recouverte par le revêtement.

Selon un mode de réalisation, la pièce selon l'invention est caractérisée en ce que le substrat est totalement recouvert par le revêtement.

Dans ce mode de réalisation, la pièce est soit entièrement visible par un voyageur situé à l'intérieur du véhicule, soit comprend au moins une partie visible par un voyageur situé à l'intérieur du véhicule et au moins une partie invisible par un voyageur situé à l'intérieur du véhicule et présente en outre un risque d'être exposée à une source de départ de feu.

Par « substrat totalement recouvert par le revêtement », on entend que la totalité de la surface extérieure du substrat est recouverte par le revêtement.

Par « source de départ de feu », on entend tout objet pouvant être à l'origine d'un départ de feu. Dans un véhicule ferroviaire, il peut s'agir, par exemple, d'une installation électrique ou d'un appareil chauffant tel qu'un radiateur.

Par « partie visible par un voyageur situé à l'intérieur du véhicule », on entend le ou les parties(s) de la pièce dont l'aspect est accessible au regard du passager.

Par « pièce ayant un risque d'être exposée à une source de départ de feu », on entend que la pièce est située à une hauteur de moins de 200 millimètres de la source de départ de feu et/ou à une distance horizontale de moins de 20 mm de la source de départ de feu.

Le feu peut aussi provenir d'un acte de malveillance.

Selon un autre mode de réalisation, la pièce selon l'invention est caractérisée en ce qu'elle comprend au moins une partie visible par un voyageur situé à l'intérieur du véhicule et au moins une partie invisible par un voyageur situé à l'intérieur du véhicule, la partie invisible de la pièce étant exempte de revêtement.

Formulé autrement, selon ce mode de réalisation, la pièce selon l'invention est caractérisée en ce qu'elle comprend au moins une partie visible par un voyageur situé à l'intérieur du véhicule et au moins une partie invisible par un voyageur situé à l'intérieur du véhicule, la partie visible de la pièce comprenant une première partie du substrat et la partie invisible de la pièce comprenant une deuxième partie du substrat, le revêtement recouvrant uniquement la première partie du substrat de la partie visible de la pièce.

Selon ce mode de réalisation, la pièce selon l'invention ne présente pas un risque d'être exposée à une source de départ de feu.

Selon un mode de réalisation, la pièce selon l'invention est caractérisée en ce que le substrat comprend de 20% à 80% en masse de fibres de renforcement par rapport à la masse totale dudit substrat.

Selon une première alternative, la pièce selon l'invention est caractérisée en ce que le substrat comprend de 20% à 30% en masse de fibres de renforcement par rapport à la masse totale dudit substrat. De préférence selon cette première alternative, la pièce est obtenue par moulage par transfert (Resin transfer molding ou RTM selon la terminologie anglaise).

Selon une deuxième alternative, la pièce selon l'invention est caractérisée en ce que le substrat comprend de 65% à 75% en masse de fibres de renforcement par rapport à la masse totale dudit substrat. De préférence selon cette deuxième alternative, la pièce est obtenue par moulage par infusion.

Selon une troisième alternative, la pièce selon l'invention est caractérisée en ce que le substrat comprend de 25% à 35% en masse de fibres de renforcement par rapport à la masse totale dudit substrat. De préférence selon cette troisième alternative, la pièce est obtenue par moulage au contact (hand lay-up selon la terminologie anglaise).

Selon un mode de réalisation, la pièce selon l'invention est caractérisée en ce que le substrat comprend de 20% à 80% en masse de résine recyclable par rapport à la masse totale dudit substrat.

Selon une première alternative, la pièce selon l'invention est caractérisée en ce que le substrat comprend de 70% à 80% en masse résine recyclable par rapport à la masse totale dudit substrat. De préférence selon cette première alternative, la pièce est obtenue par moulage par transfert (Resin transfer molding ou RTM selon la terminologie anglaise).

Selon une deuxième alternative, la pièce selon l'invention est caractérisée en ce que le substrat comprend de 25% à 35% en masse de résine par rapport à la masse totale dudit substrat. De préférence selon cette deuxième alternative, la pièce est obtenue par moulage par infusion.

Selon une troisième alternative, la pièce selon l'invention est caractérisée en ce que le substrat comprend de 65% à 75% en masse de résine par rapport à la masse totale dudit substrat. De préférence selon cette troisième alternative, la pièce est obtenue par moulage au contact (hand lay-up selon la terminologie anglaise).

Selon un mode de réalisation, la pièce selon l'invention est caractérisée en ce que les fibres de renforcement sont choisies parmi les fibres de verre et les fibres de carbone.

Selon un mode de réalisation, la pièce selon l'invention est caractérisée en ce que la résine recyclable comprend au moins une résine époxyde et un agent durcissant recyclable, ladite résine époxyde comprenant au moins deux fonctions époxydes, et ledit agent durcissant recyclable étant une polyamine comprenant au moins deux fonctions aminés.

Selon la présente invention, une « résine époxyde » est un polymère comprenant au moins deux fonctions époxydes et capable de réagir avec un agent durcissant afin de former un matériau réticulé tridimensionnel.

De préférence, l'agent durcissant recyclable comprend un groupement chimiquement clivable.

De préférence, lesdites fonctions amines comprises dans l'agent durcissant recyclable sont reliées entre elles par un groupement chimiquement clivable.

Par « groupement chimiquement clivable », on entend tout groupement chimique comprenant au moins une liaison entre deux atomes pouvant être coupée sous l'action d'un composé chimique, par exemple sous l'action d'un acide.

A titre d'exemple, l'agent durcissant recyclable peut être choisi parmi les agents durcissants commerciaux disponibles sous la dénomination Recyclamine^{®} ou ReRez System^{®} de la société Connora ou Cleavamine^{®} de la société Adesso Advanced Materials.

De préférence, la résine recyclable présente une proportion en masse entre la résine époxyde et l'agent durcissant recyclable compris entre 100 : 20 et 100 : 40.

A titre d'exemple, la résine époxyde peut être choisie parmi les résines époxydes commerciales disponibles sous la dénomination ReRez^{®} Epoxy Resin E1903, ReRez^{®} Epoxy Resin E2930 de la société Connora, Recycloset^{®} rAFL-1001 Laminating Resin System, Recycloset^{®} rAFL-1001.1 Laminating Resin System, Recycloset^{®} rAFM-1001 System, Recycloset^{®} rAFV-1001.2 Infusion System de la société Adesso Advanced Materials, SR GreenPoxy 28 / SD 3304, SR GreenPoxy 33 / SD 499x, SR GreenPoxy 56 / SD 7561 de la société Sicomin.

Selon un mode de réalisation, la pièce selon l'invention est caractérisée en ce que la résine recyclable comprend de 70% à 84% en masse de résine époxyde, et de 16% à 30% en masse d'agent durcissant recyclable par rapport à la masse totale de la résine recyclable.

Selon un mode de réalisation, la pièce selon l'invention est caractérisée en ce que la résine recyclable comprend en outre au moins une charge ignifuge, de préférence du trihydroxyde d'aluminium. De préférence, la résine recyclable comprend de 0% à 50% en masse de charge ignifuge par rapport à la masse totale de résine recyclable.

Selon un mode de réalisation, la pièce selon l'invention est caractérisée en ce que le revêtement est un enduit gélifié, aussi désigné par l'appellation gelcoat comprenant au moins une charge intumescente et au moins une résine polyester ou vinylester. De préférence, la résine polyester est choisie parmi les résines polyester d'acide isophtalique et les résines polyester d'acide orthophtalique et de néopentyle glycol.

De préférence, la charge intumescente comprend des intumescents minéraux, un agent gonflant et un agent charbonisant.

Selon un mode de réalisation, le gelcoat comprend en outre au moins un additif. De préférence, l'additif compris dans le gelcoat est choisi parmi les pigments et les additifs anti-fumée.

A titre d'exemple, l'enduit gélifié peut être choisi parmi les enduits gélifiés commerciaux disponibles sous la dénomination Büfa^{®} Firestop GC SV 285 de la société Büfa, ou sous la dénomination Crystic BP 90-78PA de la société Scott Bader.

Selon un mode de réalisation, la pièce selon l'invention est caractérisée en ce que l'épaisseur du revêtement varie de 0,8 mm à 1 mm.

Selon un mode de réalisation, la pièce selon l'invention comprend au moins une couche de peinture recouvrant totalement ou partiellement le revêtement.

Par « revêtement recouvert partiellement par une couche de peinture », on entend qu'au moins 75%, de préférence au moins 90%, de la surface du revêtement est recouverte par la couche de peinture.

De préférence, la pièce selon l'invention comprend au moins une partie visible par un voyageur situé à l'intérieur du véhicule et au moins une partie invisible par un voyageur situé à l'intérieur du véhicule, la partie invisible de la pièce étant exempte de couche de peinture.

Par « partie visible par un voyageur situé à l'intérieur du véhicule », on entend le ou les parties(s) de la pièce dont l'aspect est accessible au regard du passager.

A titre d'exemple, la peinture peut être choisie parmi les peintures commerciales disponibles sous la dénomination Arthane 51FR, Arthane 101 ou Arthane Barniz de la société Mäder, HS113-69, PUR 401-6A ou PUR Clearcoat 460-5A de la société Mankiewicz, ou PP06013CM, XD06000BV ou vernis JA06001V de la société Beckers.

De préférence, la pièce selon l'invention est caractérisée en ce qu'elle est conforme au test feu/fumée tel que défini par la norme EN 45545-2 en vigueur depuis mai 2016 (indice de classement : F 16-001-2, ICS : 13.220.20 ; 13.220.40 ; 45.060.01). Cette norme spécifie les exigences en terme de performances des matériaux et produits utilisés à bord de véhicules ferroviaires en cas d'incendie, afin notamment de minimiser la possibilité d'allumage des matériaux installés ou les effets de leur combustion en terme de chaleur, fumée et gaz toxiques.

Les niveaux de risque HLₓ servant de base au système de classification sont déterminées à partir des catégories définies dans la norme EN 45545-1 (en vigueur depuis avril 2013, indice de classement : F 16-001-1, ICS : 13.220.20 ; 45.060.01).

Pour chaque niveau de risque HLₓ, la norme EN 45545-2 spécifie les méthodes des tests ainsi que les exigences de performance Rₓ de réaction au feu des matériaux présents à bord des véhicules ferroviaires. Le niveau de risque HLₓ dépend notamment du type de véhicule ferroviaire concerné, et les exigences Rₓ dépendent de la partie du véhicule ferroviaire dans laquelle se situe la pièce concernée.

En particulier, la norme EN 45545-2 précise que les trois exigences principales pour des pièces en matériaux composites sont classifiées comme suit : R1 pour des parties internes, R7 pour des parties externes et R17 pour des extrémités avant.

Trois tests permettent de déterminer si une pièce en matériaux composites répond à ces exigences.

Le premier test permet de définir le flux de chaleur critique à l'extinction (paramètre CFE). Ce test est défini par la norme ISO 5658-2/A1 :2011 (version de novembre 2011 modifiant la norme ISO 5658-2:2006 en vigueur depuis septembre 2006). Le deuxième test permet de déterminer la quantité de chaleur dégagée (paramètre MARHE) durant la combustion de la pièce. Ce test est défini par la norme ISO 5660-1:2015 (version en vigueur depuis mars 2015). Le troisième test permet d'évaluer la densité optique (paramètres Dₛ(4) ou Dₛ(max), et VOF₄) ainsi que la toxicité des fumées produites (paramètre CIT_{G}) durant la combustion de la pièce. Ce test est défini par la norme ISO 5659-2:2017 (version en vigueur depuis mai 2017).

Les résultats des tests à obtenir afin de répondre aux exigences R1, R7 et R17, en fonction du niveau de risque HLₓ, sont résumés dans le tableau suivant :

**[Tableau 1]**

| Paramètre (unité) | Norme | Exigence | Maximum ou minimum | HL1 | HL2 | HL3 |
|---|---|---|---|---|---|---|
| CFE (kW/m²) | ISO 5658-2 | R1 | Minimum | 20 | 20 | 20 |
| | | R7 | Minimum | 20 | 20 | 20 |
| | | R17 | Minimum | 13 | 13 | 13 |
| MARHE (kW/m²) | ISO 5660-1 | R1 | Maximum | - | 90 | 60 |
| | | R7 | Maximum | - | 90 | 60 |
| | | R17 | Maximum | - | 90 | 60 |
| Dₛ(4) (sans unité) | ISO 5659-2 | R1 | Maximum | 600 | 300 | 150 |
| Dₛ(max) (sans unité) | ISO 5659-2 | R7 | Maximum | - | 600 | 300 |
| | | R17 | Maximum | - | 600 | 300 |
| VOF₄ (min) | ISO 5659-2 | R1 | Maximum | 1 200 | 600 | 300 |
| CIT_{G} (sans unité) | ISO 5659-2 | R1 | Maximum | 1,2 | 0,9 | 0,75 |
| | | R7 | Maximum | - | 1,8 | 1,5 |
| | | R17 | Maximum | - | 1,8 | 1,5 |

De préférence, la pièce selon l'invention est une pièce pour véhicule ferroviaire. De manière préférentielle, la pièce selon l'invention est l'extrémité de train, le garnissage intérieur d'une cabine tel que des montants, un pupitre de conduite, le garnissage intérieur des voitures passager tel que des montant de porte, des parois latérales, l'intercirculation

La présente invention concerne également un procédé de fabrication d'une pièce selon l'invention, comprenant les étapes suivantes :
a) une étape d'application d'une couche d'un enduit gélifié sur une surface interne d'un moule de la forme de ladite pièce,
b) une étape de durcissement de la couche d'enduit gélifié de l'étape a) pour obtenir un revêtement,
c) une étape d'application d'au moins une couche de fibres de renforcement sur le revêtement obtenu à l'étape b),
d) une étape d'ajout d'une résine recyclable sur ladite au moins une couche de fibres de renforcement obtenue à l'étape c),
e) une étape de durcissement de la résine recyclable et obtention d'un substrat, et
f) une étape de démoulage pour obtenir ladite pièce.

De préférence, l'étape a) d'application d'une couche d'un gelcoat s'effectue par pistolage en fond de moule

De préférence, l'étape b) de durcissement de la couche de gelcoat de l'étape a) s'effectue à température ambiante avec un catalyseur chimique, ou éventuellement sous lampe UV avec un photo-initiateur et un photo catalyseur.

De préférence, l'étape c) d'application d'au moins une couche de fibres de renforcement sur le revêtement obtenu à l'étape b) s'effectue manuellement par un opérateur.

Selon un mode de réalisation, l'étape d) d'ajout d'une résine recyclable sur ladite au moins une couche de fibres de renforcement obtenue à l'étape c) comprend la fermeture par un deuxième moule rigide, sous pression réduite, typiquement entre -0,5 et 0,4 bar, du moule comprenant ladite couche de fibres de renforcement, suivie de l'injection d'une résine recyclable par une pompe, dans ledit moule fermé sous pression réduite.

Selon un autre mode de réalisation, l'étape d) d'ajout d'une résine recyclable sur ladite au moins une couche de fibres de renforcement obtenue à l'étape c) comprend la fermeture par une membrane souple, par exemple une bâche à vide, et sous pression réduite, typiquement entre -0,8 et -0,9 bar, du moule comprenant ladite couche de fibres de renforcement, suivie de l'injection d'une résine recyclable par aspiration grâce à la dépression présente dans ledit moule fermé sous pression réduite.

Selon un autre mode de réalisation encore, l'étape d) d'ajout d'une résine recyclable sur ladite au moins une couche de fibres de renforcement obtenue à l'étape c) comprend l'imprégnation manuelle, de préférence à l'aide d'un rouleau, d'un pinceau, d'une brosse ou d'une raclette, par une résine recyclable de ladite couche de fibres de renforcement obtenue à l'étape c), et obtention d'une couche de fibres de renforcement imprégnée de résine recyclable, suivie de l'élimination des inclusions d'air comprises dans ladite couche de fibres de renforcement imprégnée de résine recyclable.

De préférence, l'étape e) de durcissement de la résine recyclable s'effectue à température ambiante,

Selon un mode de réalisation, le procédé de fabrication d'une pièce selon l'invention comprend une étape de post-cuisson postérieure à l'étape de démoulage, ladite étape de post-cuisson étant effectuée à 50°C pendant 6h.

Selon un mode de réalisation, le procédé de fabrication d'une pièce selon l'invention comprend une étape de finition postérieure à l'étape de démoulage, et éventuellement à l'étape de post-cuisson lorsque celle-ci est présente, ladite étape de finition comprenant par exemple une sous-étape de reprise des pièces pour éliminer les défauts de moulage et une sous-étape de ponçage de plans de joints.

Selon un mode de réalisation préférentiel, le procédé de fabrication d'une pièce selon l'invention comprend une étape g) d'ajout d'au moins une couche de peinture recouvrant totalement ou partiellement la surface du revêtement, ladite étape g) étant postérieure à l'étape f) de démoulage, et éventuellement à l'étape de post-cuisson et/ou à l'étape de finition lorsque celle(s)-ci est(sont) présente(s).

De préférence, l'étape g) d'ajout d'au moins une couche de peinture s'effectue par application au pistolet.

La présente invention concerne également un véhicule, notamment un véhicule ferroviaire, comprenant au moins une pièce telle que définie ci-dessus.

### FIGURES

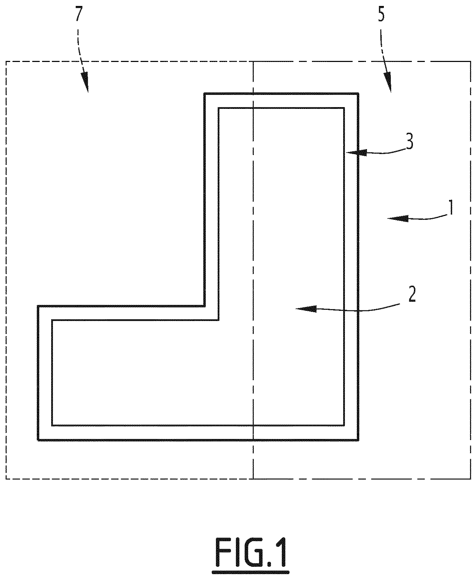

[Fig 1] La figure 1 est une vue schématique et en coupe d'une pièce (1) en matériau composite recyclable pour véhicule ferroviaire. La pièce (1) est formée d'un substrat (2) et d'un revêtement (3). La pièce (1) comprend une partie visible (5) par un voyageur situé à l'intérieur du véhicule et une partie invisible (7) par un voyageur situé à l'intérieur du véhicule. Selon le mode de réalisation représenté sur la figure 1, la pièce (1) présente un risque d'être exposée à une source de départ de feu, et le revêtement (3) recouvre entièrement le substrat (2).

Selon un autre mode de réalisation non représenté, la pièce (1) ne présente pas un risque d'être exposée à une source de départ de feu, la partie visible (5) de la pièce comprenant une première partie du substrat et la partie invisible (7) de la pièce comprenant une deuxième partie du substrat, et le revêtement (3) recouvre uniquement la première partie du substrat de la partie visible (5) de la pièce.

Le substrat (2) est réalisé en un matériau composite recyclable comprenant des fibres de renforcement en verre ou en carbone qui sont agencées dans une résine recyclable. Cette résine recyclable est obtenue par exemple à partir d'une résine époxyde et d'un agent durcissant recyclable, par exemple un parmi ceux disponibles sous la dénomination Recyclamine^{®}. Le revêtement (3) est constitué d'une résine vinylester comprenant des charges intumescentes. La présence du revêtement (3) assure une protection du substrat (2) en cas d'incendie.

La présence du revêtement (3) recouvrant totalement ou partiellement le substrat (2) permet d'obtenir une pièce (1) en matériau composite recyclable répondant à la norme EN 45545 concernant les exigences en terme de performances des matériaux utilisés à bord de véhicules ferroviaires en cas d'incendie.

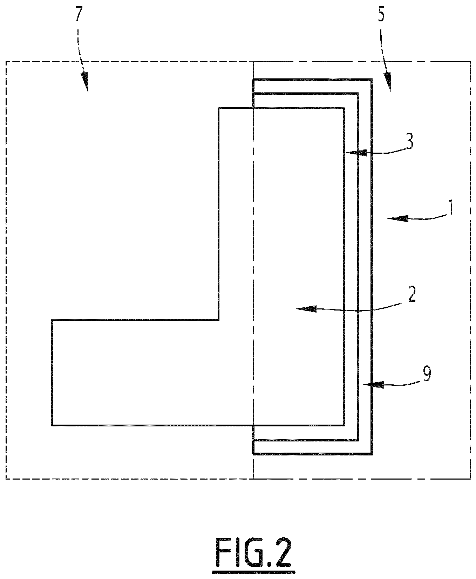

[Fig 2] La figure 2 est une vue schématique et en coupe d'une pièce (1) en matériau composite recyclable pour véhicule ferroviaire selon un autre mode de réalisation. La pièce (1) est formée d'un substrat (2), d'un revêtement (3) et d'une couche de peinture (9). La pièce (1) comprend une partie visible (5) par un voyageur situé à l'intérieur du véhicule et une partie invisible (7) par un voyageur situé à l'intérieur du véhicule. La partie visible (5) comprend une première partie du substrat (2), ladite première partie du substrat (2) étant recouvert par le revêtement (3), et une couche de peinture (9) recouvrant le revêtement (3). Selon le mode de réalisation représenté sur la figure 1, la pièce (1) ne présente pas un risque d'être exposée à une source de départ de feu, et la partie invisible (7) comprend une deuxième partie du substrat (2) et est exempte de revêtement (3) et de couche de peinture (9). Selon un autre mode de réalisation non représenté, la pièce (1) présente un risque d'être exposée à une source de départ de feu, et le revêtement (3) recouvre entièrement le substrat (2), et la couche de peinture (9) recouvre uniquement la partie de revêtement (3) compris dans la partie visible (5) de la pièce (1). Selon encore un autre mode de réalisation non représenté, la pièce (1) présente un risque d'être exposée à une source de départ de feu, et le revêtement (3) recouvre entièrement le substrat (2), et la couche de peinture (9) recouvre toute la surface du revêtement (3).

La présence de la couche de peinture (9) permet d'améliorer l'aspect esthétique de la pièce selon l'invention. La couche de peinture 9 joue également un rôle de protection de la pièce face aux intempéries (pluie par exemple). Elle améliore la résistance de la pièce face aux produits lessiviels, à l'abrasion, aux rayures, aux UVs ou aux dégradations volontaires (graffitis).

## Revendications

1. Pièce (1) pour véhicule, notamment pour véhicule ferroviaire, comprenant un substrat (2) et un revêtement (3), **caractérisée en ce que** ledit substrat (2) comprend une résine recyclable et des fibres de renforcement, la résine recyclable comprenant au moins une résine époxyde et un agent durcissant recyclable, ladite résine époxyde comprenant au moins deux fonctions époxydes, et ledit agent durcissant recyclable étant une polyamine comprenant au moins deux fonctions aminés, et **en ce que** le substrat (2) comprend une surface recouverte partiellement ou totalement par ledit revêtement (3), ledit revêtement (3) comprenant au moins une charge intumescente comprenant des intumescents minéraux, un agent gonflant et un agent charbonisant.

2. Pièce selon la revendication 1, **caractérisée en ce qu'**elle comprend au moins une partie visible (5) par un voyageur situé à l'intérieur du véhicule et au moins une partie invisible (7) par un voyageur situé à l'intérieur du véhicule, la partie invisible de la pièce étant exempte de revêtement (3).

3. Pièce selon l'une des revendications précédentes, **caractérisée en ce que** le substrat (2) comprend de 20% à 80% en masse de fibres de renforcement par rapport à la masse totale dudit substrat (2).

4. Pièce selon l'une des revendications précédentes, **caractérisée en ce que** les fibres de renforcement sont choisies parmi les fibres de verre et les fibres de carbone.

5. Pièce selon l'une des revendications précédentes, **caractérisée en ce que** la résine recyclable comprend de 70% à 84% en masse de résine époxyde et de 16% à 30% en masse d'agent durcissant recyclable par rapport à la masse totale de la résine recyclable.

6. Pièce selon l'une des revendications précédentes, **caractérisée en ce que** le revêtement (3) est un enduit gélifié comprenant au moins une charge intumescente et au moins une résine polyester ou vinylester, la résine polyester étant choisie de préférence parmi les résines polyester d'acide isophtalique et les résines polyester d'acide orthophtalique et de néopentyle glycol.

7. Pièce selon l'une des revendications précédentes, **caractérisée en ce qu'**elle comprend au moins une couche de peinture (9) recouvrant totalement ou partiellement le revêtement (3).

8. Procédé de fabrication d'une pièce selon l'une des revendications 1 à 7, comprenant les étapes suivantes :
a) une étape d'application d'une couche d'un enduit gélifié sur une surface interne d'un moule de la forme de ladite pièce,
b) une étape de durcissement de la couche d'enduit gélifié de l'étape a) pour obtenir un revêtement,
c) une étape d'application d'au moins une couche de fibres de renforcement sur le revêtement obtenu à l'étape b),
d) une étape d'ajout d'une résine recyclable sur ladite couche de fibres de renforcement obtenue à l'étape c),
e) une étape de durcissement de la résine recyclable et obtention d'un substrat, et
f) une étape de démoulage pour obtenir ladite pièce.

9. Véhicule, notamment véhicule ferroviaire, comprenant au moins une pièce telle que définie selon l'une des revendications 1 à 7.
